# EUROPEAN PATENT APPLICATION

(11) **EP 4 215 806 A1**
(43) Date of publication of application: **26.07.2023**
(21) Application number: 22152630.4
(22) Date of filing: 21.01.2022
(51) Int. Cl.: F21V 5/04, F21V 7/00, F21V 23/04, F21V 7/06, F21V 7/04, F21Y 115/10

(54) **LIGHTING DEVICE WITH SENSOR**

(71) Applicant: Zumtobel Lighting GmbH, 6850 Dornbirn (AT)
(72) Inventor: Allgaier, Dominik, 6850 Dornbirn (AT); Lorenz, Stefan, 6850 Dornbirn (AT)
(74) Representative: Beder, Jens

(57) **Abstract**

The present invention relates to a lighting device comprising a light source (2), a sensor (6) configured to monitor an environment of the lighting device, an optical element (3, 16) configured to direct, by refraction and/or reflection, light of the light source (2) for illumination, wherein the sensor (5, 7) is positioned and directed to at least a part (14, 15, 20) of the optical element (3, 16) that directs the light of the light source (2) for illumination and directs light arriving from the environment to the sensor (6) to image the environment.

## Description

The invention is in the field of lighting equipment. In particular, the invention relates to a lighting device including an optical element for influencing the light emitted by a light source of the lighting device and a sensor for monitoring an environment of the lighting device.

Sensors are commonly used in lighting equipment to control the lighting equipment based on detected events or changes in their environment.

EP 3 220 042 A1 discloses a lighting device (luminaire) comprising a LED module, a diffusor illuminated by the LED module, a cup-shaped reflector for reflecting the light emitted by the diffusor and a passive infrared sensor (PIR sensor) for motion detection, wherein the PIR sensor is mounted on a circuit board of the LED module and a lens or window is integrated into the reflector or the diffusor to guide infrared radiation to the PIR sensor.

Since the PIR sensor is directed to the open side of the cup-shaped reflector, a person looking into the opening (direct line of sight) can easily see the sensor or its lens. While infra-red or PIR-sensors often affect aesthetics of the lighting device, cameras, on the other hand, can make a person feel like they are being watched. Further, the camera usually requires special optics to capture a desired area.

It is an object of the present invention to provide an apparatus and a method, which reduce the above problems. In particular, an object of the present invention is to provide a lighting device with an unobtrusive sensor with low efforts and costs.

This object is achieved by a lighting device according to the enclosed independent claim 1. Advantageous features of the present invention are defined in the corresponding dependent claims.

According to the present invention, a lighting device comprises a light source, a sensor configured to monitor an environment of the lighting device, an optical element configured to direct, by refraction and/or reflection and/or diffraction, light of a light source for illumination, wherein the sensor is positioned and directed to at least a part of the optical element that directs the light of the light source for illumination and directs light arriving from the environment to the sensor to image/represent the environment to be monitored.

The sensor is thus obscured by the optical element, which is located at least partially in the light path between the sensor and the environment (field of vision). An existing optical element, originally intended/designed only to direct the light of the light source for illumination, is additionally used to direct the light arriving from the environment to the sensor. In this way, no special optical element for guiding/directing the light from the environment to the sensor by refraction and/or reflection is required, which reduces efforts and costs. Since the part of the optical element directs both the light of the light source and the light arriving from the environment, the sensor can be placed outside the light path between the light source and the part of the optical element so that it does not interfere with the light emission of the lighting device.

The sensor can be a light sensitive sensor like an infrared sensor, an array of light sensors (visible, NIR, thermal, THz), a PIR-sensor or an imaging device (visible light camera, NIR, infrared camera, thermal camera, or Terahertz (THz) Imager). The imaging device can be output/generate moving images or still images.

The lighting device can comprise an interface configured to output, via cable or radio, signals or information generated by the sensor to another device and/or can comprise a control means configured to control the lighting device based on the signals or information. The light arriving from the environment can be an infrared signal for controlling the lighting device and/or the other device and/or can be an infrared signal for transferring data, wherein the infrared sensor is configured to receive the infrared signal to monitor the environment.

The lighting device can be configured to operate in a repeater mode, in which a transmitter of the lighting device retransmits the infrared signal received by the infrared sensor. The PIR-sensor can be a motion detection sensor configured to detect a motion of a person or a motion of an object and to generate and output the signal when the motion is detected. Additionally, the control means can be configured to switch on the lighting device when the motion is detected.

Alternatively, the control means or the other device can be configured to perform an automatic presence detection, an activity detection and/or user recognition based on the signal of the camera (imaging device). In addition, the control means or the other device can be configured to correct image distortion and/or aberrations caused by the optic element, which is, for example, an illumination optic and a non-imaging optic, or a non-ideal imaging optic, based on stored error correction information.

The lighting device can be a downlight luminaire, a luminaire for indoor use (freestanding luminaire, wall-mounted luminaire) or an outdoor luminaire for illuminating streets, roads, paths, buildings, facades or walls.

The optical element can be a reflector having at least a semi-transparent area that appears reflective on one side and transparent at the other, wherein the sensor is located at the transparent side and the light source is located at the reflective side so that the sensor is not visible from the outside and the light emitted by the lighting device is not affected by the sensor.

The optical element can be a reflector (e.g., parabolic reflector) in whose focal point (focus) the light source is positioned or can be positioned, wherein the sensor is directed to an inner side of the (parabolic) reflector and is positioned so that a distance between the sensor and the inner side is more than twice the focal length of the parabolic reflector. In this way, the sensor detection range (field of vision) is enlarged without need for extra optics.

The sensor can be configured to monitor at least a first area of the environment and the optical element can be configured to direct the light of the light source to a second area of the environment, wherein the part of the optical element is configured to direct the light of the light source to the second area and to direct light arriving from the first area to the sensor. The first area can be a part of the second area.

The sensor's field of view may be completely or partially covered by the optical element, wherein the part of the optical element can comprise a first reflection surface or a first group of reflection surfaces and the sensor is directed only to the first reflection surface or the first group or is directed to the first reflection surface or the first group and to an opening in the lighting device that provides a direct line of sight to a third area of the environment to monitor that third area as well.

Light directed to the sensor can be reflected by the reflector once or several times. The optical element can comprise a second reflection surface for reflecting the light arriving from the first area to the first reflection surface or to at least one reflection surface of the first group.

The optical element can be configured to direct light arriving from different areas (directions) to the sensor, wherein the optical element can be a polygonal cup-shaped reflector in which at least two reflection surfaces of the first group are adjacent sides of the polygonal cup-shaped reflector. The adjacent sides reflect/guide the light from different directions to the sensor, so that different regions/areas can be monitored simultaneously by the sensor.

In addition or alternatively, the optical element can be a faceted reflector in which the reflection surfaces of the first group are facets of the faceted reflector.

Alternatively, the optical element can be a lens, which focuses, disperses and/or reflects the light of the light source. The sensor can be positioned so that the optical axis of the lens and the optical axis of the sensor are different and/or not parallel. The light source can be arranged along the optical axis of the lens or can be positioned in the focal point of the lens, wherein the sensor is not positioned in the focal point.

The optical element can be a Total Internal Reflection (TIR) lens, wherein the optical axis of the light sensor is directed to a TIR surface of the TIR lens, an exit surface of the TIR lens or a reactive surface of the TIR lens.

The lighting device can comprise a housing, in which the light source, the sensor and/or the optical element is disposed. The housing can comprise at least one translucent enclosure part (e.g. transparent cover), wherein the optical element directs the light of the light source in a direction to the translucent enclosure part for the illumination.

Embodiments of the invention are discussed in detail with reference to the enclosed figures, in which
Fig. 1 shows a perspective view of a lighting device according to a first embodiment of the present invention,
Fig. 2 shows a simplified block diagram of the lighting device shown in Fig. 1,
Fig. 3 shows a schematic view of parts of a lighting device according to a second embodiment of the present invention,
Fig. 4 shows a schematic view of parts of a lighting device according to a third embodiment of the present invention,
Fig. 5 shows a schematic view of parts of a lighting device according to a fourth embodiment of the present invention and
Fig. 6 shows a schematic view of parts of a lighting device according to a fifth embodiment of the present invention.

In the figures, same reference numbers denote same or equivalent structures. The explanation of structures with same reference numbers in different figures is avoided where deemed possible for sake of conciseness.

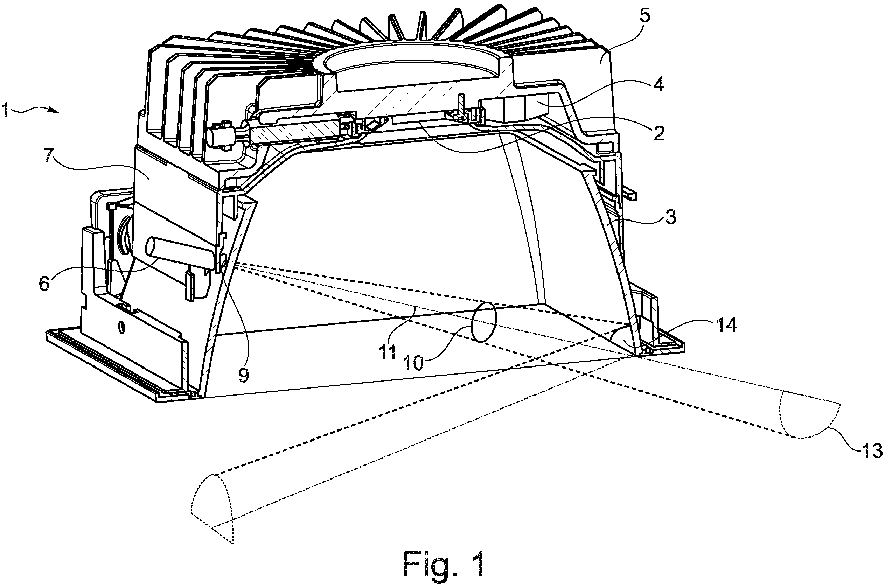

Fig. 1 shows a lighting device 1 according to a first embodiment of the present invention in a sectional view. The lighting device 1 is a recessed luminaire designed for recessed use in walls or ceilings and comprises a light source 2, a reflector 3, an electronic control gear 4 for the light source 2, a heat sink 5 for the light source 2 and the electronic control gear 4, a sensor 6 for monitoring an environment of the lighting device 1, an optional transmitter (not shown) for transmitting control signals of the electronic control gear 4 and/or sensor signals and a connecting element 7 for connecting the reflector 3 with the heat sink 5, the light source 2 and the electronic control gear 4. The heat sink 5 and the connecting element 7 form a housing for the electronic control gear 4 and the light source 2, which can be a LED module controlled and powered by the electronic control gear 4.

The reflector 3 has a square frustum shape with four sides and is configured to reflect the light arriving from the light source 2 onto an area to be illuminated. The area can be a narrow hallway or corridor and, when the lighting device 1 is installed in the ceiling of the corridor, the lighting device 1 is configured to detect the presence of a person in the corridor and switch on the light when the presence of a person is detected.

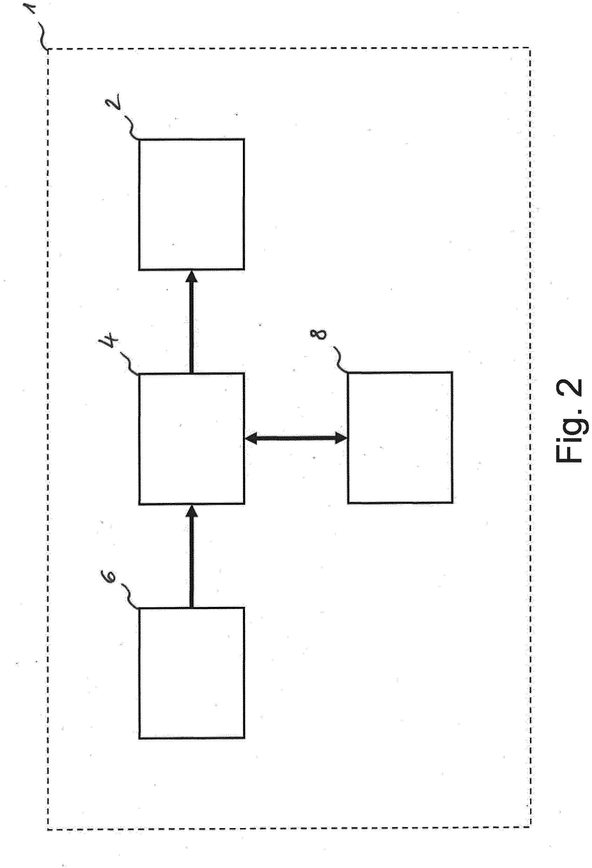

Fig. 2 shows a block diagram of the lighting device 1 shown in Fig. 1. The sensor 6 is a camera and configured to monitor the corridor in both directions (main direction of extension). The electronic control gear 4 determines the presence of a person based on the image signal received from the sensor 6 and outputs operating currents to the light source 2 and a control signal to the transmitter 8, if the presence is determined. The transmitter 8 transmits the control signal to another (next) lighting device so that it is also switched on (swarm control). The electronic control gear 4 turns off the light if no presence is detected within a certain period of time.

Alternatively, the transmitter 8 can transmit the image signal to an external control device (e.g., edge or cloud computing), which determines the presence of a person based on the image signal and transmits the control signal to the lighting device(s) to switch them on. The electronic control gear 4 or the external control device determines the presence of a person by detecting motion in successive images captured by the sensor 6 and/or by detecting and classifying objects (person) in the images.

As shown in Fig. 1, the reflector 3 comprises an opening 9 for the sensor 6 approximately in the center of one of its reflector sides, wherein the sensor 6 is positioned by the connecting element 7 in the opening 9. The sensor 6 has a circular field of view 10 and the optical axis 11 of the sensor 6 is directed towards the lower edge of the opposite reflector side as indicated by the dotted line 11 in Fig. 1, so that the lower part 13 of the field of view 10 has a direct line of sight to the corridor (front facing image) and the upper part of the field of view 10 is directed to a part 14 of the reflector 3 that reflects light arriving from the opposite direction to the sensor 6 (backward facing image).

In this way, the sensor 6 simultaneously monitors different directions/areas of the corridor and the lighting device 1 and the other lighting device are switch on, if the presence of a person is detected in any one of directions/areas. Alternatively, the direction/area, in which the presence of a person is detected, can be determined by separately detecting the presence in the front facing image and the backward facing image, wherein one or more lighting devices assigned to the determined direction/area are switched on. To monitor other directions/areas, a further sensor can be placed on an adjacent reflector side in the same way and/or the sensor 6 can be directed to two adjacent reflector sides by, for example, directing the optical axis 11 to the edge between two adjacent reflector sides. In this way, the electronic control gear 4 or the external control device can detect the presence of a person in each of at least four directions/areas and control lighting device(s) assigned/located in a direction/area, in which the presence is detected.

The part 14 of the reflector side, to which the sensor 6 is directed, has an almost flat surface so that the image hardly shows any distortions that may have to be corrected by image processing. Alternatively, the part(s) of the reflector 3, to which the sensor 6 is directed, can have a curved surface to achieve specific optical effects for the image capturing.

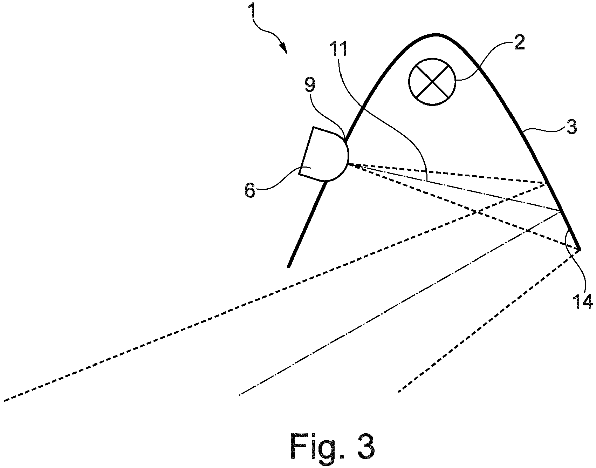

Fig. 3 shows a lighting device 1 according to a second embodiment of the present invention in a sectional view. The reflector 3 of the lighting device 1 shown in Fig. 3 is a parabolic reflector having a cup-shaped or saddle-shaped reflection surface. The light source 2 is located approximately at the focal point (focus) of the reflector 3 and the sensor 6 is located outside the focus. The optical axis 11 of the sensor 6 is directed to the reflector 3 so that the sensor's field of view is completely covered by part 14 of the reflector 3 and sensor 6 is positioned so that the distance to the reflection surface is more than twice of the focal length of the reflector 3. In this way, the reflector 3 enlarges the sensor's field of view without the need for additional optics, wherein the sensor 6 generates an image signal (virtual picture) from an area behind the sensor 6, which is smaller (due to reflector curvature). Distortions caused by the reflector 3 can be compensated/corrected by image processing based on stored correction information as in digital lens correction.

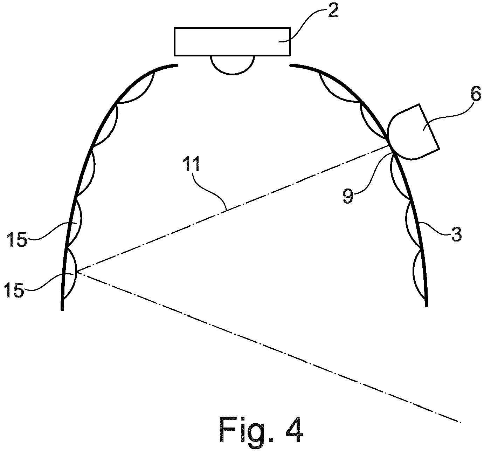

Fig. 4 shows a sectional view of an illumination device 1 according to a third embodiment of the present invention. The reflector 3 of the lighting device 1 shown in Fig. 4 is a facet reflector having a plurality of reflecting facets 15 (convex mirrors) and a cup-shaped or saddle-shaped reflection surface. The optical axis 11 of the sensor 6 is directed to a facet 15 of the reflector 3 so that the sensor's field of view is completely covered by the facet 15, which reflects the light arriving from the environment and light of the environment arriving from other facets 15 to the sensor 6. Alternatively, the sensor's field of view can be covered by two or more facets 15, so that the sensor's field of view is further enlarged.

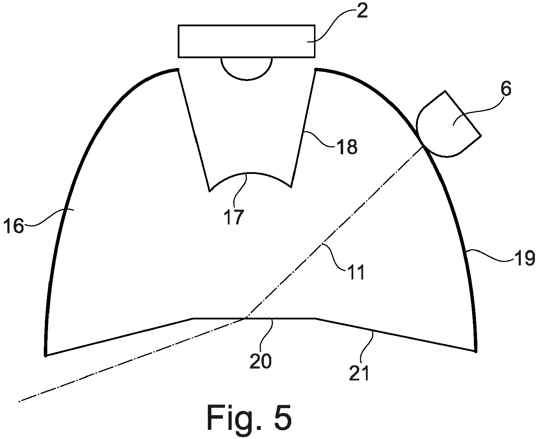

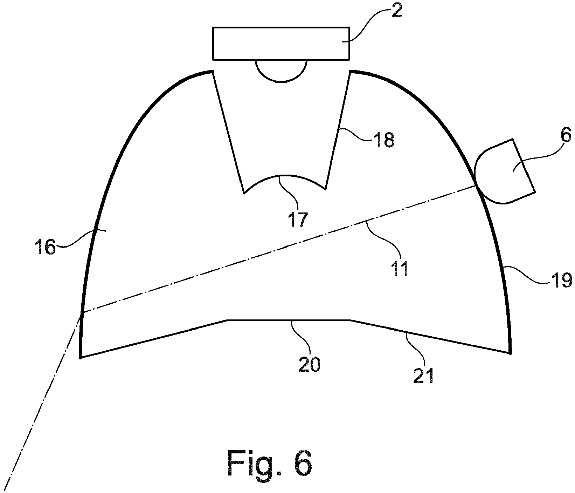

The lighting device 1 shown in Fig. 5 comprises a total internal reflection (TIR) lens 16 as a collimating optic in order to generate a light beam with small beam angle and high central luminous intensity. The TIR lens 16 includes a refracted surface 17, which aims to focus rays emitted from around the optical axis (not shown) of the light source 2 into the collimation direction, an incident surface 18, a TIR surface 19, a first exit surface 20 and a second exit surface 21. The sensor 6 is located in an area of the TIR surface 20 and the optical axis 11 of the sensor 6 is directed to the exit surface 20, on which the light arriving from the environment is directed to the sensor 6 by refraction. In this way, the sensor 6 is hidden behind the TIR lens 16, which enlarges the sensor's field of view. Alternatively or in addition, the optical axis 11 of the sensor 6 or the optical axis 11 of a further sensor can be directed to TIR surface 19 to monitor another direction/area as shown in Fig. 6.

With the lighting device 1 shown in Figs. 1 to 6, the presence/absence of a person or an object is determined by detecting certain changes in the images (color, brightness and/or pixel patterns) and/or by classifying objects (person) in the images to control the lighting device 1 or other lighting devices based on the determined presence. Alternatively or in addition, the electronic control gear 4 or the external control device can be configured to determine/classify activity of persons (activity detection), identify persons/users (user recognition) or to determine color and/or type of an object to be illuminated, which is located in the detection range of the sensor 6, and can be configured to output information or an alarm signal assigned to the detected activity, to output information or an signal assigned to the identified person or to control the color temperature and/or brightness of the light source 2 based on the determined color/type. The electronic control gear 4 can comprise a power-factor correction circuit, a DC-to-DC converter and a controller, wherein the controller and/or the external control device can be a microcontroller or application specific integrated circuit (ASIC).

Alternatively, the sensor 6 can comprise the controller configured to perform at least one of the described operations and/or can comprise an interface configured to output, via cable or radio, the described information, control signal or alarm signal to the electronic control gear 4, the other device and/or the external control device.

Even if the sensor 6 is not primarily intended for switching the light source 2 of the lighting device 1 but for capturing images, identifying persons or outputting warning signals, the sensor 6 can be configured to evaluate the lighting conditions for its work (lighting conditions in the area to be monitored) and to control the color temperature and/or brightness of the light source 2 to improve/change the lighting conditions for the sensor 6 based on the evaluation. The environment can be monitored by the sensor 6 continuously, only at certain times or when an external control signal is received.

## Claims

1. Lighting device comprising
a light source (2),
a sensor (6) configured to monitor an environment of the lighting device,
an optical element (3, 16) configured to direct, by refraction and/or reflection, light of the light source (2) for illumination,
**characterized in that**
the sensor (5, 7) is positioned and directed to at least a part (14, 15, 20) of the optical element (3, 16) that directs the light of the light source (2) for illumination and directs light arriving from the environment to the sensor (6) to image the environment.

2. The lighting device according to claim 1, wherein
the sensor (6) is configured to monitor at least a first area of the environment, and
the optical element (3, 16) is configured to direct the light of the light source (2) to a second area of the environment and
the part (14, 15, 20) of the optical element (3, 16) directs the light of the light source (2) to the second area and directs light arriving from the first area to the sensor (6).

3. The lighting device according to claim 1 or 2, wherein
the sensor (6) is an infra-red sensor, a PIR-sensor or a camera.

4. The lighting device according to any one of the preceding claims, further comprising
an interface (8) configured to output signals or information generated by the sensor (6) and/or a control means (4) configured to control the lighting device based on the signals or information.

5. The lighting device according to any one of the preceding claims, wherein
the optical element (3, 16) is a reflector, in particular a parabolic reflector, and the sensor (6) is located behind a semi-transparent area of the reflector.

6. The lighting device according to any one of the preceding claims, wherein
the optical element (3, 16) is a reflector,
the lighting device is configured to position the light source (2) in focus of the reflector and
the sensor (6) is directed to an inner side of the reflector and is positioned so that a distance between the sensor (6) and the inner side is more than twice the focal length of the reflector.

7. The lighting device according to any one of preceding claims, wherein
the part (14, 15, 20) of the optical element (3, 16) comprises a first reflection surface or a first group of reflection surfaces and
the sensor (6) is directed only to the first reflection surface or the first group or is directed to the first reflection surface or the first group and to an opening in the lighting device to monitor a third area of the environment.

8. The lighting device according to claim 7, wherein
the optical element (3, 16) comprises a second reflection surface for reflecting the light arriving from the first area to the first reflection surface or to at least one reflection surface of the first group.

9. The lighting device according to claim 7 or 8, wherein
the optical element (3, 16) is a polygonal cup-shaped reflector and
at least two reflection surfaces of the first group are adjacent sides of the polygonal cup-shaped reflector.

10. The lighting device according to any one of claims 7 to 9, wherein
the optical element (3, 16) is a faceted reflector and
the reflection surfaces of the first group are facets of the faceted reflector.

11. The lighting device according to any one of claims 1 to 4, wherein
the optical element (3, 16) is a lens.

12. The lighting device according to claim 11, wherein
optical axis of the lens and optical axis (11) of the sensor are different and/or not parallel.

13. The lighting device according to claim 11 or 12, wherein
the lens is a TIR lens.

14. The lighting device according to claim 13, wherein
the optical axis (11) of the sensor (6) is directed to a TIR surface of the TIR lens, an exit surface of the TIR lens or a reactive surface of the TIR lens.

15. The lighting device according to any one of the preceding claims, further comprising a housing, in which the light source, the sensor and/or the optical element is disposed.
